(19) Europäisches Patentamt
European Patent Office
Office européen des brevets

(11) Veröffentlichungsnummer: **0 103 278**
**B1**

(12) **EUROPÄISCHE PATENTSCHRIFT**

(45) Veröffentlichungstag der Patentschrift: **29.06.88**

(51) Int. Cl.⁴: **C 09 B 1/51**, D 06 P 3/60

(21) Anmeldenummer: **83108872.9**

(22) Anmeldetag: **08.09.83**

# (54) Anthrachinoide Farbstoffe und deren Verwendung.

(30) Priorität: **14.09.82 DE 3233948**

(43) Veröffentlichungstag der Anmeldung: **21.03.84 Patentblatt 84/12**

(45) Bekanntmachung des Hinweises auf die Patenterteilung: **29.06.88 Patentblatt 88/26**

(84) Benannte Vertragsstaaten: **CH DE FR GB IT LI**

(56) Entgegenhaltungen:
**CH-A-348 494**
**DE-A-1 950 679**
**FR-A-809 993**
**FR-A-1 311 332**
**FR-A-2 116 549**
**FR-A-2 370 779**
**FR-A-2 380 369**
**GB-A-1 069 295**

(73) Patentinhaber: **BASF Aktiengesellschaft, Carl-Bosch-Strasse 38, D-6700 Ludwigshafen (DE)**

(72) Erfinder: **Epple, Gerhard, Dr., Karl-Gayer-Strasse 8, D-6719 Weisenheim (DE)**
Erfinder: **Krallmann, Reinhold, Bachweg 2, D-6719 Weisenheim (DE)**
Erfinder: **Kermer, Wolf-Dieter, Dr., Im Schlittweg 4, D-6701 Fussgoenheim (DE)**
Erfinder: **Weber, Hans, Im Wachtelschlag 33, D-6733 Hassloch (DE)**

**EP 0 103 278 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

In der FR-A-809 993 werden 1,4,5-Trisbenzoylamino-, 1,4,5-Trisanisoylamino- und 1-Benzoylamino-4,5-dianisoylamino-8-hydroxyanthrachinone beschrieben. Diese Benzoylaminoverbindungen dienen als Pigmente für Druckfarben, Lacke und plastische Massen sowie als Farbstoffe zum Färben von Cellulosefasern nach dem Küpenfärbeverfahren.

Die Erfindung betrifft neue anthrachinoide Farbstoffe auf der Basis von α-tetrasubstituiertem Anthrachinon und die Verwendung dieser Farbstoffe.

Die neuen Farbstoffe haben die Formel

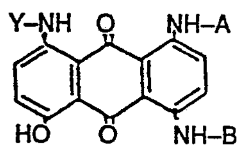

(I),

in der

A und B für $-\overset{O}{\overset{\|}{C}}-R$, wobei A und B gleich oder verschieden sein können,

Y für 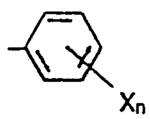

oder für einen gegebenenfalls durch Chlor, Brom, Methoxy, Ethoxy, Nitro und/oder Amino substituierten Benzthiazol- oder Benzoxazolrest,

R für gegebenenfalls durch Chlor oder Brom substituiertes $C_1$- bis $C_{17}$-Alkyl, für gegebenenfalls durch Chlor, Brom, $C_1$- bis $C_4$-Alkyl, Methoxy, Ethoxy, Phenoxy oder Nitro substituiertes Phenyl, für $C_1$- bis $C_{10}$-Alkoxy, für Phenoxy, für Phenoxy-$C_1$- bis $C_3$-alkyl, worin der Phenoxyrest gegebenenfalls durch 1, 2 oder 3 Chlor, Brom, Methyl oder Ethyl substituiert ist und bei 2 oder 3 Substituenten diese gleich oder verschieden sein können, für Alkoxyalkoxy mit insgesamt 3 bis 11 C-Atomen, für $C_7$- bis $C_{10}$-Phenalkyl oder für $C_1$- bis $C_4$-Alkoxycarbonyl-$C_2$- bis $C_4$-alkyl, X für Chlor, Brom, $C_1$- bis $C_8$-Alkyl, Cyclohexyl, $C_1$- bis $C_4$-Alkoxy, Benzyl, Benzyloxy, Trifluormethyl, $C_1$- bis $C_6$-Alkoxycarbonyl, Alkoxyalkoxycarbonyl mit 3 bis 8 C-Atomen im Alkoxyalkoxy, für gegebenenfalls durch $C_1$- bis $C_4$-Alkyl, Chlor oder Brom substituiertes Phenyl oder Phenoxy, für N-$C_1$- bis $C_{13}$-Alkylcarbamoyl, für N,N-Di-$C_1$- bis $C_{13}$-alkylcarbamoyl und n für 0, 1, 2, 3, 4 oder 5 stehen, wobei bei $n > 1$ die Substituenten gleich oder verschieden sein können.

Die neuen Farbstoffe eignen sich vorzugsweise zum Färben und Bedrucken von mit Wasser mischbaren Quellmitteln gequollener Cellulose und Cellulose enthaltendem Fasermaterial wie Cellulose-Polyester nach dem in der DE-PS-1 811 796 beschriebenen Verfahren. Man erhält Färbungen oder Drucke in blauen bis türkisfarbenen Tönen. Die Färbungen oder Drucke weisen sehr gute Echtheiten auf; zu nennen sind vor allem die Lichtechtheit, die Naßechtheit und die Reibechtheit.

In der Gruppe $-\overset{O}{\overset{\|}{C}}-R$ sind für R außer den bestimmt genannten Resten im einzelnen z. B. zu nennen:

a) gegebenenfalls durch Chlor oder Brom substituiertes $C_1$- bis $C_{17}$-Alkyl: Methyl, Ethyl, Propyl, Isopropyl, n-Butyl, Isobutyl, Pentyl, Hexyl, Octyl-(1), 2-Ethylhexyl, Heptyl-(3), Decyl, Dodecyl, Tetradecyl, Hexydecyl, Chlormethyl, Dichlormethyl, 2-Chlorethyl, 3-Chlorpropyl und Chlorbutyl;
b) gegebenenfalls substituiertes Phenyl: Phenyl, 2-, 3-, 4-Methylphenyl, 2-, 3-, 4-Ethylphenyl, 4-Butylphenyl, 4-Isopropylphenyl, 2-, 3- oder 4-Chlorphenyl, 4-Bromphenyl, 4-Methoxyphenyl, 4-Ethoxyphenyl, 3- oder 4-Nitrophenyl und 4-Phenoxyphenyl;
c) $C_1$- bis $C_{10}$-Alkoxy: Methoxy, Ethoxy, Propoxy, n-Butoxy, n-Hexoxy, 2-Ethylhexoxy, Octoxy und Isodecoxy;
d) Phenoxyalkyl: Phenoxymethyl

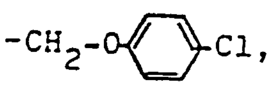, 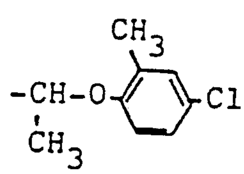

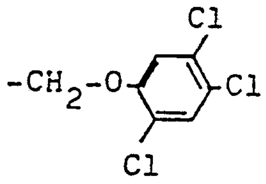, 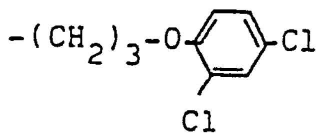 und

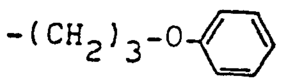 ;

e) Alkoxyalkoxy mit insgesamt 3 bis 11 C-Atomen: 2-Methoxyethoxy, 2-Ethoxyethoxy, 2-Propoxyethoxy, 2-Butoxyethoxy, (2'-Ethylhexoxy)-ethoxy, 3-Methoxypropoxy, 3-Ethoxypropoxy, 3-Butoxypropoxy und-(2'-Ethylhexoxy)-propoxy;
f) $C_7$- bis $C_{10}$-Phenalkyl: Benzyl, 2-Phenylethyl, 2-Phenylpropyl, 3-Phenylpropyl und Phenylbutyl;
g) $C_1$- bis $C_4$-Alkoxycarbonyl-$C_1$- bis $C_4$-alkyl: Methoxycarbonylethyl, Ethoxycarbonylethyl, Butoxycarbonylethyl, Methoxycarbonylpropyl, Ethoxycarbonylpropyl, Butoxycarbonylpropyl, Methoxycarbonylbutyl und Butoxycarbonylbutyl.

Für Y = 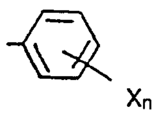 kommen als Substituenten X im einzelnen z. B. in Betracht:

2-, 3- oder 4-Methyl, 2-, 3- oder 4-Ethyl, 4-Isopropyl-, 4-tert.-Butyl, 4-n-Butyl, 4-n-Octyl, 2-, 3-, oder 4-Methoxy, 2-, 3- oder 4-Ethoxy-, 2,3-, 2,4-, 2,5-, 3,4- oder 3,5-Dimethyl, 2,4,6-Trimethyl-, 2,4-, 2,5- oder 3,5-Dimethoxy-, 3-Isopropyl-4-methoxy-, 2-, 3- oder 4-Chlor, 2-, 3- oder 4-Brom, 3-Trifluormethyl, 2,3-, 2,4-, 2,5-, 3,4-, 3,5-Dichlor, x-Dichlor, x-Trichlor, 2-Chlormethyl, 2-Chlor-5-methyl, 3-Chlor-2-methyl, 4-Chlor-2-methyl, 5-Chlor-2-methyl, 2-Brom-4-methyl, x-Brom-2-methyl, 2-Chlor-5-methoxy, 5-Chlor-2-methoxy, 2,4-Dimethyl-6-brom, 4-Chlor-2,5-dimethoxy, 5-Chlor-2,4-dimethoxy, 4-Phenyl, 4-Phenyl-3-methyl, 4-Phenoxy, 4-Benzyloxy, 4-(4'-Chlor)-phenoxy, 3-Methoxycarbonyl, 3-Butoxycarbonyl, 3-Ethoxycarbonyl, 3-(2'-Ethylhexoxy)carbonyl, N-Methylcarbamoyl, N-Ethylcarbamoyl, N,N-Dimethylcarbamoyl und N-n-Octylcarbamoyl.

Den gegebenenfalls substituierten Benzthiazol- und Benzoxazolresten liegen z. B. Benzthiazol und Benzoxazol sowie deren 5- oder 6-Chlor-, 6-Brom-, 5,6-Dichlor-, 4-, 5-, 6- oder 7-Methyl-, 4-Nitro-, 6-Ethoxy- und 6-Methoxyderivate zugrunde. Von diesen sind aus wirtschaftlichen Gründen der nicht substituierte Benzthiazol- und Benzoxazolrest bevorzugt.

Von den Farbstoffen der Formel I sind aus anwendungstechnischen und coloristischen Gründen solche bevorzugt, in denen

Y = 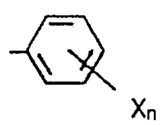 und

$A{=}B{=}-\overset{O}{\overset{\|}{C}}-R^1$ sind, worin X
für Chlor oder Methyl,
n für 0, 1, 2, 3 oder 4 und
$R^1$ für $C_1$- bis $C_4$-Alkoxy oder $C_2$- bis $C_{15}$-Alkyl stehen, wobei bei $n > 1$ die Substituenten gleich oder verschieden sein können.

Besonders bevorzugt sind von diesen Farbstoffen solche in denen $R^1$ für Methoxy, Ethoxy, n-Butoxy, Ethyl, n-Propyl oder $n$-$C_{15}H_{31}$ und n für 0, 1, 2 oder 3 steht.

Zur Herstellung der Farbstoffe der Formel I mit Y = 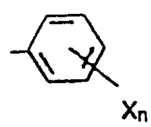

werden 1-Amino-8-arylamino-4,5-dihydroxyanthrachinone (II) mit Ammoniak zu 1,4-Diamino-5-hydroxy-8-arylaminoanthrachinon (Ia) umgesetzt und anschließend mit Acylierungsmitteln zwei

$R-\overset{O}{\overset{\|}{C}}-$gruppen eingeführt:

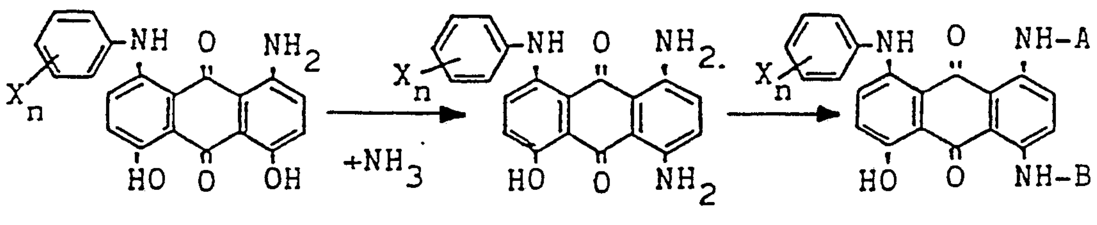


(II) (Ia) (Ib)

Zur Kondensation der Verbindung II mit Ammoniak werden zunächst Phenol, Borsäure und Toluol 1 bis 8 Stunden am Rückfluß gekocht und dabei das entstehende Reaktionswasser azeotrop abdestilliert. Nach Zugabe der Anthrachinonverbindung II wird das Reaktionsgemisch auf Reaktionstemperatur erhitzt und bei dieser Temperatur so lange gasförmiger Ammoniak eingeleitet, bis dünnschichtchromatographisch kein Ausgangsmaterial mehr nachweisbar ist. Die Reaktionstemperaturen liegen zwischen 50°C und dem Siedepunkt des Reaktionsgemisches. Die Reaktionszeiten bewegen sich zwischen 15 Minuten und 8 Stunden. Zur Aufarbeitung wird das Reaktionsprodukt im Reaktionsgemisch bei 60°C bis 90°C mit einem das Reaktionsprodukt nicht oder nur wenig lösenden Verdünnungsmittels gefällt und in üblicher Weise isoliert.

Die Farbstoffe T mit Y = gegebenenfalls substituierter Benzthiazol- oder Benzoxazolrest werden entsprechend den Angaben der Beispiele 1 und 2 hergestellt.

Die Acylierung führt man zweckmäßigerweise so durch, daß man die Verbindungen der Formel Ia in einer unter den Reaktionsbedingungen inerten Flüssigkeit suspendiert, auf Reaktionstemperatur erwärmt und unter Rühren das Acylierungsmittel zutropft. Man kann auch so verfahren, daß man das Acylierungsmittel bei Raumtemperatur zur Suspension zufügt und dann auf Reaktionstemperatur erwärmt. Man verwendet normalerweise 1,0 bis 3,0 Mol Acylierungsmittel je Mol der zu acylierenden Verbindung. Die Acylierung wird zweckmäßigerweise bei Temperaturen zwischen Raumtemperatur und 180°C, vorzugsweise zwischen 50 und 150°C, durchgeführt. Bei diesen Temperaturen ist die Umsetzung im allgemeinen nach 0,2 bis 6 Stunden beendet.

Als Acylierungsmittel kommen Verbindungen in Betracht, mit denen der Rest

$-\overset{\overset{O}{\|}}{C}-R$ in die Aminogruppe eingeführt werden kann, z. B. die Carbonsäurechloride, -bromide oder -anhydride, Chlorameisensäureester oder Säurechloride von Dicarbonsäurehalbester.

Als unter den Reaktionsbedingungen inerte organische Flüssigkeiten kommen z. B. chlorierte aliphatische Kohlenwasserstoffe wie Chloroform, Tetrachlorkohlenstoff, Dichlorethan, Tetrachlorethan, aromatische Kohlenwasserstoffe wie Toluol, Xylol, Tetraalkylbenzole ($^R$Solvesso), chlorierte aromatische Kohlenwasserstoffe wie Chlorbenzol, o-Dichlorbenzol, Trichlorbenzol; N,N-Dialkylcarbonsäureamide wie N,N-Dimethylformamid, N,N-Dimethylacetamid, N-Methyl-pyrrolidon, außerdem Nitrobenzol und Pyridin in Betracht.

Die Menge an der inerten organischen Flüssigkeit wird so bemessen, daß das Reaktionsgemisch rührbar oder durchmischbar ist; hierzu reicht im allgemeinen die 2,5- bis 15 fache Gewichtsmenge, bezogen auf die zu acylierende Verbindung aus.

Zur Aufarbeitung wird das Reaktionsgemisch auf Raumtemperatur abgekühlt, gegebenenfalls wird das Acylierungsprodukt durch Zugabe eines das die Verbindung Ib nicht oder nur wenig lösenden Verdünnungsmittels gefällt, und das Reaktionsprodukt in an sich bekannter Weise isoliert.

Die neuen Farbstoffe werden nach den in den DE-PS-1 811 796, den DE-OS-2 524 243, 2 528 743 und 3 125 869 beschriebenen Verfahren auf Cellulosefasern und Cellulosefasern enthaltendem Fasermaterial appliziert.

Die folgenden Beispiele sollen die Erfindung weiter erläutern. Die Teile und Prozentangaben beziehen sich auf das Gewicht.

**Beispiel 1**

a) 27 Teile (0,1 Mol) 1,8-Diamino-4,5-dihydroxy-anthrachinon werden in 150 Teilen Phenol unter Rühren mit 17 Teilen (0,1 Mol) 2-Chlorbenzthiazol versetzt und 3 Stunden auf 130°C erwärmt. Dabei entsteht das 1-Benzthiazolylamino(2')-4,5-dihydroxy-8-amino-anthrachinon (Lösung 1).

b) 150 Teile Phenol, 12 Teile Borsäure (0,194 Mol) und 70 Teile Toluol werden 3 Stunden unter Rühren auf Rückflußtemperatur erwärmt und dabei das entstehende Reaktionswasser ausgekreist. Anschließend wird das Toluol abdestilliert. Nach dem Abkühlen auf 70°C werden 4,3 Teile (0,253 Mol) Ammoniak eingeleitet. Dann wird die auf 60 bis 70°C warme Lösung 1 (Beispiel Ia) zugefügt und das Reaktionsgemisch so lange bei 90°C gerührt, bis dünnschichtchromatographisch kein Ausgangsprodukt mehr nachweisbar ist (Dauer: 1 Stunde). Man kühlt auf 70°C ab und fügt 160 Teile Methanol zu. Nach dem Abkühlen auf Raumtemperatur wird das ausgefallene Reaktionsprodukt abgesaugt. Das Fil-

hydroxy-8-benzthiazolyl-amino(2')-anthrachinon (= 87,1 % der Theorie).

Analyse: $C_{21}H_{14}N_4SO_3$ (402)

| | | | | | |
|---|---|---|---|---|---|
| ber.: | 62,7 % C | 3,5 % H | 12,0 % O | 13,9 % N | 8,0 % S |
| gef.: | 62,3 | 3,3 | | 13,0 | 7,7 |

chmp. > 260°C.

c) 10,1 Teile 1,4-Diamino-5-hydroxy-8-benzthiazolyl-amino-(2')-anthrachinon (0,025 Mol) werden in 50 Teilen Nitrobenzol unter Rühren mit 6,4 Teilen (0,06 Mol) Buttersäurechlorid versetzt und 2 Stunden auf 120°C erhitzt. Nach dem Abkühlen auf Raumtemperatur wird das ausgefallene Reaktionsprodukt abgesaugt, das Filtergut mit Methanol und anschließend mit heißem Wasser nachgewaschen und getrocknet. Man erhält 11,3 Teile Farbstoff der Formel

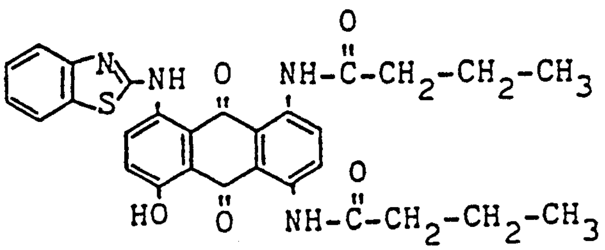

Schmp. >260°C

d) 30 Teile des nach c) erhaltenen Farbstoffs, 6 Teile Ligninsulfonat und 10 Teile Dipropylenglykol werden in 50 Teilen Wasser verrührt und die Suspension in einer Sandmühle gemahlen, bis die Teilchengröße bei 0,5 µm und darunter liegt. Dann gibt man 1 Teil Pentachlorphenol zu und stellt durch Zugeben von Wasser den Gehalt an Farbstoff auf 30 % (bezogen auf die Zubereitung) ein.

e) Aus 10 Teilen der nach d) erhaltenen Zubereitung, 100 Teilen Polyethylenoxyd vom Molekulargewicht 300 und 790 Teilen einer 3-%-igen

Alginatverdickung wird eine Druckpaste hergestellt. Mit dieser Druckpaste wird ein Baumwollgewebe auf einer Rotationsfilmdruckmaschine bedruckt und der Druck bei 100°C getrocknet. Danach wird der Druck mit Heißluft 1 Minute auf 200°C erhitzt, anschließend kalt gespült, kochend geseift, wiederum kalt gespült und getrocknet. Man erhält einen rotstichig blauen waschechten Druck auf weißem Grund.

Bedruckt man ein Mischgewebe aus Baumwolle/Polyester in der gleichen Weise, so erhält man nach dem Fixieren und Waschen einen Druck, bei dem beide Fasern im gleichen Farbton gefärbt sind.

**Beispiel 2**

20,1 Teile 1,4-Diamino-5-hydroxy-8-benzthiazolyl-amino (2[1])-anthrachinon (0,05 Mol) werden in 100 Teilen Nitrobenzol unter Rühren mit 10,2 Teilen (0,075 Mol) Chlorameisensäurebutylester und 8,0 Teilen (0,075 Mol) Buttersäurechlorid versetzt und 2 Stunden auf 150°C erhitzt. Nach dem Abkühlen auf Raumtemperatur wird das Reaktionsprodukt mit 320 Teilen Methanol ausgefällt, abfiltriert, mit Methanol und anschließend mit heißem Wasser gewaschen und getrocknet. Man erhält 17 Teile eines Farbstoffgemisches vom Fp. 227°C, das entsprechend Beispiel ld) in eine Zubereitung überführt und nach Beispiel 1e) auf Polyester/Baumwolle appliziert einen rotstichig blauen licht- und waschechten Druck auf weißem Grund ergibt.

Die in der folgenden Tabelle genannten Farbstoffe wurden analog den Angaben in den Beispielen 1 oder 2 hergestellt, in wäßrige Zubereitungen überführt und zum Färben und/oder Bedrucken von Baumwolle oder Baumwolle/Polyester-Mischungen verwendet. Die Farbtöne der auf Baumwolle oder Baumwolle/Polyester-Fasermischungen erhaltenen Färbungen sind in der rechten Spalte angegeben.

| Bsp. | Y- | A- | B- | Schmp. [°C] | Farbton auf BW und BW/PES |
|---|---|---|---|---|---|
| 3 | 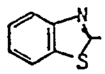 | Gemisch aus<br>$CH_3-CH_2-\overset{O}{C}-$<br>und<br>$H_3C-CH_2-O-\overset{O}{C}-$ | $CH_3-CH_2-O-\overset{O}{C}-$<br>$H_3C-CH_2-\overset{O}{C}-$ | 248 | rotstichiges Blau |
| 4 | 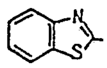 | Gemisch aus<br>$C_4H_9-\underset{C_2H_5}{CH}-\overset{O}{C}-$<br>und<br>$H_3C-CH_2-\overset{O}{C}-$ | $CH_3-CH_2-\overset{O}{C}-$<br>$H_9C_4-\underset{C_2H_5}{CH}-\overset{O}{C}-$ | 212 | rotstichiges Blau |
| 5 | 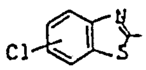 | $CH_3-CH_2-CH_2-\overset{O}{C}-$ | $CH_3-CH_2-CH_2-\overset{O}{C}-$ | 218 | rotstichiges Blau |
| 6 | 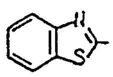 | 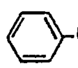$-O-CH_2-\overset{O}{C}-$ | 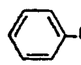$-O-CH_2-\overset{O}{C}-$ | >260 | gedecktes Blau |
| 7 | 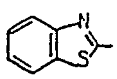 | $C_4H_9O-\overset{O}{C}-$ | $C_4H_9O-\overset{O}{C}-$ | 216 | Blau |
| 8 | 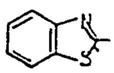 | Gemisch aus<br>$CH_3(CH_2)_2-\overset{O}{C}-$<br>und<br>$H_3C-(CH_2)_6-\overset{O}{C}-$ | $CH_3-(CH_2)_6-\overset{O}{C}-$<br>$H_3C-(CH_2)_2-\overset{O}{C}-$ | 210 | rotstichiges Blau |
| 9 | 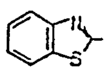 | Gemisch aus<br>$CH_3(CH_2)_2\overset{O}{C}-$<br>und<br>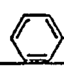$-OCH_2-\overset{O}{C}-$ | 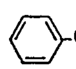$-O-CH_2-\overset{O}{C}-$<br>$H_3C-(CH_2)_2-\overset{O}{C}-$ | 224 | rotstichiges Blau |
| 10 | 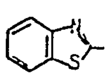 | $C_4H_9-\underset{C_2H_5}{CH}-\overset{O}{C}-$ | $C_4H_9-\underset{C_2H_5}{CH}-\overset{O}{C}-$ | 131 | rotstichiges Blau |
| 11 | 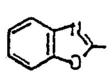 | $C_4H_9-O-\overset{O}{C}-$ | $C_4H_9-O-\overset{O}{C}-$ | 240 | rotstichiges Blau |
| 12 | 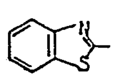 | $CH_3-\overset{O}{C}-$ | $CH_3-\overset{O}{C}-$ | >260 | Blau |
| 13 | 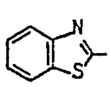 | $CH_3-O-\overset{O}{C}-$ | $CH_3-O-\overset{O}{C}-$ | >260 | gedecktes Blau |

**Beispiel 14**

a) 120 Teile Phenol, 12 Teile Borsäure (0,194 Mol) und 70 Teile Toluol werden 3 Stunden unter Rühren auf Rückflußtemperatur erhitzt. Dabei wird das entstehende Reaktionswasser ausgekreist. Nach dem Abdestillieren des Toluols wird das Reaktionsgemisch auf 100°C abgekühlt. Nach dem Zugeben von 34,6 Teilen (0,1 Mol) 1-Amino-4,5-dihydroxy-8-phenylaminoanthrachinon wird das Gemisch auf 100°C erwärmt und bei dieser Temperatur 4,5 Teile (0,264 Mol) gasförmiger Ammoniak eingeleitet. Das Reaktionsgemisch wird 2 Stunden bei gleicher Temperatur nachgerührt. Man kühlt auf 90°C ab und versetzt mit 280 Teilen Methanol. Nach dem Abkühlen auf Raumtemperatur wird das ausgefallene Reaktionsprodukt abgesaugt, mit Methanol und Wasser gewaschen und getrocknet. Ausbeute: 20 Teile 1,4-Diamino-5-hydroxy-8-phenylaminoanthrachinon (= 58 % d.Th.), Schmp. 234°C.

b) 17,25 Teile (0,05 Mol) der nach a) erhaltenen Anthrachinonverbindung werden in 100 Teilen Nitrobenzol mit 18,9 Teilen (0,2 Mol) Chlorameisensäuremethylester versetzt und das Gemisch 4 Stunden bei 120 bis 130°C gerührt. Nach dem Abkühlen auf 80°C wird das Reaktionsprodukt durch Zugeben von 320 Teilen Methanol gefällt, die Fällung abgesaugt, mit Methanol und Wasser gewaschen und getrocknet. Ausbeute: 15 Teile des Farbstoffs der Formel

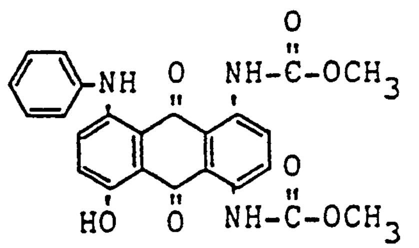

Schmp. 248°C.

Analyse $C_{24}H_{19}N_3O_7$ (M. 461)

| | | | |
|---|---|---|---|
| ber. | 62,5 % C | 4,1 % H | 9,1 % N |
| gef. | 62,4 % C | 4,1 % H | 9,5 % N |

c) 30 Teile des nach b) erhaltenen Farbstoffs, 6 Teile Ligninsulfonat und 10 Teile Dipropylenglykol werden in 50 Teilen Wasser verrührt und die Suspension in einer Sandmühle gemahlen, bis die Teilchengröße bei 0,5 µm und darunter liegt. Dann gibt man 1 Teil Pentachlorphenol zu und stellt durch Zugabe von Wasser den Gehalt an Farbstoff auf 30 % (bezogen auf die Zubereitung) ein.

d) Aus 10 Teilen der nach c) erhaltenen Zubereitung, 100 Teilen Polyethylenoxyd (M = 300) und 790 Teilen einer 3-%-igen Alginatverdickung wird eine Druckpaste hergestellt.

e) Ein Baumwollgewebe wird auf einer Rotationsfilmdruckmaschine mit der nach d) hergestellten Druckpaste bedruckt und der Druck bei 100°C getrocknet. Danach wird der Druck mit Heißluft 1 Minute auf 200°C erhitzt, anschließend kalt gespült, kochend geseift, wiederum kalt gespült und getrocknet. Man erhält einen blauen waschechten Druck auf weißem Grund

Bedruckt man ein Mischgewebe aus Baumwolle/Polyester in der gleichen Weise, so erhält man nach dem Fixieren und Waschen einen Druck, bei dem beide Fasern im gleichen Farbton gefärbt sind.

**Beispiel 15**

Zu 17,25 Teilen (0,05 Mol) 1,4-Diamino-5-hydroxy-8-phenylaminoanthrachinon (Beispiel 14a) in 100 Teilen Nitrobenzol werden 20,45 Teile (0,15 Mol) Chlorameisensäurebutylester gegeben und das Gemisch 2 Stunden bei 120 bis 130°C gerührt. Nach dem Abkühlen auf Raumtemperatur werden 37,5 Teile Sulfurylchlorid zugetropft und 2 Stunden nachgerührt. Das Reaktionsprodukt wird mit 240 Teilen Methanol ausgefällt, die Fällung abgesaugt, mit Methanol und Wasser nachgewaschen und getrocknet.

Ausbeute: 26 Teile eines dunklen Pulvers vom Fp. 208°C mit einem Chlorgehalt von 23 %, welches Baumwolle/Polyester-Mischgewebe in einem klaren blauen Farbton mit guten Echtheiten färbt.

Die in der folgenden Tabelle genannten Farbstoffe wurden analog den Angaben der Beispiele 14 und 15 hergestellt, in wäßrige Zubereitungen überführt und zum Färben und/oder Bedrucken von Baumwolle oder Baumwolle/Polyester-Mischungen verwendet. Die Farbtöne der auf Baumwolle (BW) oder Baumwolle/Polyester-Fasermischungen (BW/PES) erhaltenen Färbungen sind in der rechten Spalte angegeben.

| Bsp. | Y- | A- | B- | Schmp. [°C] | Farbton auf BW und BW/PES |
|---|---|---|---|---|---|
| 16 | 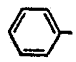 | $C_4H_9O-\overset{O}{\overset{\parallel}{C}}-$ | $C_4H_9O-\overset{O}{\overset{\parallel}{C}}-$ | 220 | Blau |
| 17 | 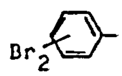 | $CH_3-O-\overset{O}{\overset{\parallel}{C}}-$ | $CH_3-O-\overset{O}{\overset{\parallel}{C}}-$ | 208 | Blau |
| 18 | 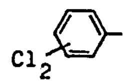 | 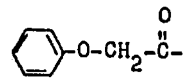 | 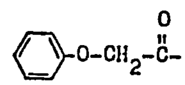 | 236 | Blau |
| 19 | 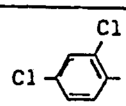 | $CH_3-CH_2-CH_2-\overset{O}{\overset{\parallel}{C}}-$ | $CH_3-CH_2-CH_2-\overset{O}{\overset{\parallel}{C}}-$ | 250 | gedecktes Blau |
| 20 | 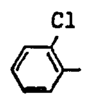 | $CH_3-\underset{CH_3}{CH}-\overset{O}{\overset{\parallel}{C}}-$ | $CH_3-\underset{CH_3}{CH}-\overset{O}{\overset{\parallel}{C}}-$ | 196-200 | Blau |
| 21 | 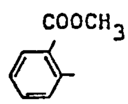 | $C_4H_9O-\overset{O}{\overset{\parallel}{C}}-$ | $C_4H_9O-\overset{O}{\overset{\parallel}{C}}-$ | 250 | Blau |
| 22 | 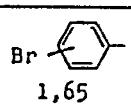 | 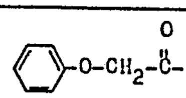 | 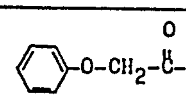 | 266 | Blau |
| 23 | 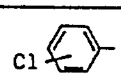 | 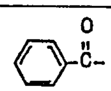 | 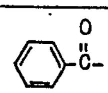 | 222 | trübes grünstichiges Blau |
| 24 | 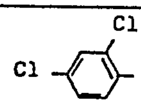 | $C_4H_9O-\overset{O}{\overset{\parallel}{C}}-$ | $C_4H_9O-\overset{O}{\overset{\parallel}{C}}-$ | 250 | Blau |
| 25 | 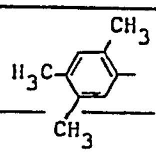 | $CH_3-CH_2-\overset{O}{\overset{\parallel}{C}}-$ | $CH_3-CH_2-\overset{O}{\overset{\parallel}{C}}-$ | 224 | Blau |
| 26 | 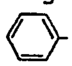 | $CH_3-(CH_2)_{14}-\overset{O}{\overset{\parallel}{C}}-$ | $CH_3-(CH_2)_{14}-\overset{O}{\overset{\parallel}{C}}-$ | 132 | Blau (BW) |
| 27 | 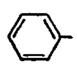 | 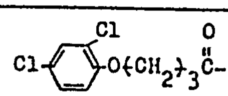 | 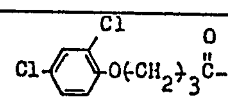 | 186 | grünstichiges Blau |
| 28 | 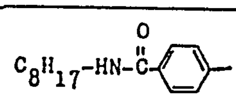 | H- | H- | 206 | Blaugrün |
| 29 | 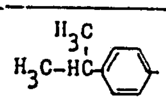 | $CH_3-CH_2-CH_2-\overset{O}{\overset{\parallel}{C}}-$ | $CH_3-CH_2-CH_2-\overset{O}{\overset{\parallel}{C}}-$ | 130 | Blau |

| Bsp. | Y- | A- | B- | Schmp. [°C] | Farbton auf BW und BW/PES |
|---|---|---|---|---|---|
| 30 | 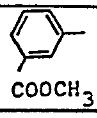 | H- | H- | 250-264 | Blau |
| 31 | 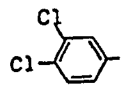 | $C_4H_9O-\overset{O}{\overset{\|}{C}}-$ | $C_4H_9O-\overset{O}{\overset{\|}{C}}-$ | 260 | trübes grünstichiges Blau |
| 32 | 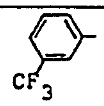 | $CH_3O-\overset{O}{\overset{\|}{C}}-$ | $CH_3O-\overset{O}{\overset{\|}{C}}-$ | 267 | rotstichiges Blau |
| 33 | 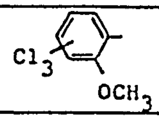 | $C_4H_9O-\overset{O}{\overset{\|}{C}}-$ | $C_4H_9O-\overset{O}{\overset{\|}{C}}-$ | 220 | Blau |
| 34 | 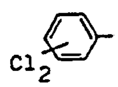 | $C_4H_9-\underset{C_2H_5}{CH}-\overset{O}{\overset{\|}{C}}-$ | $C_4H_9-\underset{C_2H_5}{CH}-\overset{O}{\overset{\|}{C}}-$ | 96 | Blau |
| 35 | 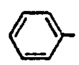 | 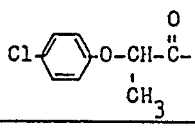 | 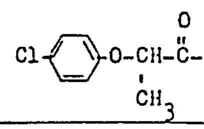 | 168 | Blau |
| 36 | 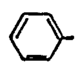 | 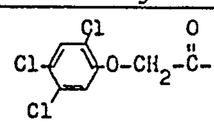 | 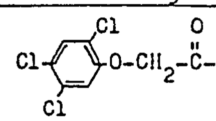 | 260 | trübes Blau |
| 37 | 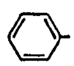 | Gemisch aus 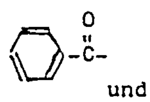 und $CH_3-(CH_2)_2-\overset{O}{\overset{\|}{C}}-$ | $CH_3-CH_2-CH_2-\overset{O}{\overset{\|}{C}}-$ 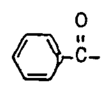 | 190 | Blau |
| 38 | 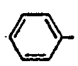 | Gemisch aus 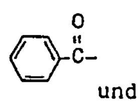 und 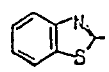 | 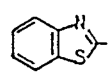 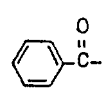 | 174 | Türkis |
| 39 | 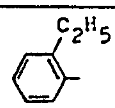 | $CH_3-CH_2-\overset{O}{\overset{\|}{C}}-$ | $CH_3-CH_2-\overset{O}{\overset{\|}{C}}-$ | 222 | grünst. Blau |
| 40 | 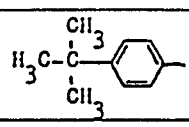 | $CH_3-CH_2-\overset{O}{\overset{\|}{C}}-$ | $CH_3-CH_2-\overset{O}{\overset{\|}{C}}-$ | 230 | Blau |
| 41 | 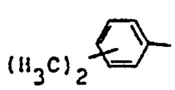 | $CH_3-(CH_2)_6-\overset{O}{\overset{\|}{C}}-$ | $CH_3-(CH_2)_6-\overset{O}{\overset{\|}{C}}-$ | 166 | Blau |
| 42 | 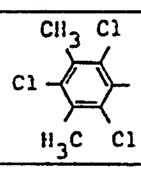 | $CH_3-O-\overset{O}{\overset{\|}{C}}-$ | $CH_3O-\overset{O}{\overset{\|}{C}}-$ | 230 | Blauviolett |

**Patentansprüche**

1. Farbstoffe der Formel

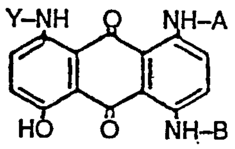

in der

A und B für 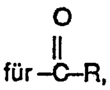, wobei A und B gleich oder verschieden sein können,

Y für 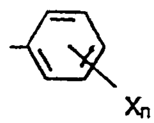

oder für einen gegebenenfalls durch Chlor, Brom, Methoxy, Ethoxy, Nitro und/oder Amino substituierten Benzthiazol- oder Benzoxazolrest,

R für gegebenenfalls durch Chlor oder Brom substituiertes $C_1$- bis $C_{17}$-Alkyl, für gegebenenfalls durch Chlor, Brom, $C_1$- bis $C_4$-Alkyl, Methoxy, Ethoxy, Phenoxy oder Nitro substituiertes Phenyl, für $C_1$- bis $C_{10}$-Alkoxy, für Phenoxy, für Phenoxy-$C_1$- bis $C_3$-alkyl, worin der Phenoxyrest gegebenenfalls durch 1, 2 oder 3 Chlor, Brom, Methyl oder Ethyl substituiert ist und bei 2 oder 3 Substituenten diese gleich oder verschieden sein können, für Alkoxyalkoxy mit insgesamt 3 bis 11 C-Atomen, für $C_7$- bis $C_{10}$-Phenalkyl oder für $C_1$- bis $C_4$-Alkoxycarbonyl-$C_2$- bis $C_4$-alkyl,

X für Chlor,- Brom, $C_1$- bis $C_8$-Alkyl, Cyclohexyl, $C_1$- bis $C_4$-Alkoxy, Benzyl, Benzyloxy, Trifluormethyl, $C_1$- bis $C_6$-Alkoxycarbonyl, Alkoxyalkoxycarbonyl mit 3 bis 8 C-Atomen im Alkoxyalkoxy, für gegebenenfalls durch $C_1$- bis $C_4$-Alkyl, Chlor oder Brom substituiertes Phenyl oder Phenoxy, für N-$C_1$- bis $C_{13}$-Alkylcarbamoyl, für N,N-Di-$C_1$- bis $C_{13}$-alkylcarbamoyl und

n für 0, 1, 2, 3, 4 oder 5 stehen, wobei bei $n > 1$ die Substituenten gleich oder verschieden sein können.

2. Farbstoffe gemäß Anspruch 1, *dadurch gekennzeichnet*, daß A und B für

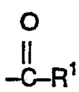 und

Y für 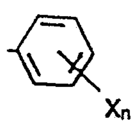

stehen, worin $R^1$ $C_1$- bis $C_4$-Alkoxy oder $C_2$- bis $C_{15}$-Alkyl,
X Chlor oder Methyl und
n 0, 1, 2, 3 oder 4 bedeuten und wobei bei $n > 1$ die Substituenten gleich oder verschieden sein können.

3. Farbstoffe gemäß Anspruch 2, *dadurch gekennzeichnet*, daß
$R^1$ für Methoxy, Ethoxy, n-Butoxy, Ethyl, n-Propyl oder für n-$C_{15}H_{31}$ und
n für 0, 1, 2 oder 3 stehen.

4. Verwendung der Farbstoffe gemäß Anspruch 1 zum Färben und Bedrucken von mit Wasser mischbaren Quellmitteln gequollener Cellulose oder Cellulose enthaltendem Fasermaterial.

**Claims**

1. A dye of the formula

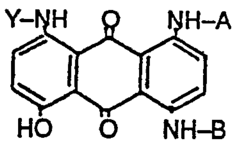

where
A and B can be identical or different and each is

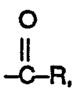, Y is 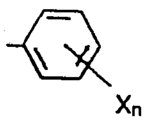

or benzothiazolyl or benzoxazolyl which is unsubstituted or substituted by chlorine, bromine, methoxy, ethoxy, nitro and/or amino,

R is $C_1$-$C_{17}$-alkyl which is unsubstituted or substituted by chlorine or bromine, phenyl which is unsubstituted or substituted by chlorine, bromine, $C_1$-$C_4$-alkyl, methoxy, ethoxy, phenoxy or nitro, $C_1$-$C_{10}$-alkoxy, phenoxy, phenoxy-$C_1$-$C_3$-alkyl, where the phenoxy radical is unsubstituted or substituted by 1 substituent or 2 or 3 identical or different substituents from the group comprising chlorine, bromine, methyl and ethyl, or is alkoxyalkoxy of 3 to 11 carbon atoms in total, $C_7$-$C_{10}$-phenalkyl or $C_1$-$C_4$-alkoxycarbonyl-$C_2$-$C_4$-alkyl,

X is chlorine, bromine, $C_1$-$C_8$-alkyl, cyclohexyl, $C_1$-$C_4$-alkoxy, benzyl, benzyloxy, trifluoromethyl, $C_1$-$C_6$-alkoxycarbonyl, alkoxyalkoxycarbonyl, where alkoxyalkoxy is of 3 to 8 carbon atoms, phenoxy or phenyl which is unsubstituted or substituted by $C_1$-$C_4$-alkyl, chlorine or bromine, N-$C_1$-$C_{13}$-alkylcarbamyl or N,N-di-$C_1C_{13}$-alkylcarbamyl and n is 0, 1, 2, 3, 4 or 5, and where, if n >1, the substituents can be identical or different.

2. A dye as claimed in claim 1, where A and B are

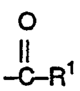 and

Y is 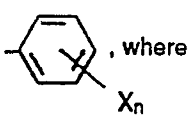, where

$R^1$ is $C_1$-$C_4$-alkoxy or $C_2$-$C_{15}$-alkyl,
X is chlorine or methyl and
n is 0, 1, 2, 3 or 4, and where, if n >1, the substituents X can be identical or different.

3. A dye as claimed in claim 2, where $R^1$ is methoxy, ethoxy, n-butoxy, ethyl, n-propyl or n-$C_{15}H_{31}$, and n is 0, 1, 2 or 3.

4. Use of a dye as claimed in claim 1 for dyeing and printing cellulose swollen with water-miscible swelling agents and cellulose-containing fiber material.

**Revendications**

1. Colorants de formule

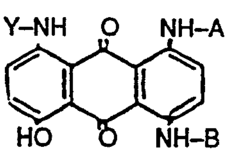

dans laquelle

O
||
A et B sont mis pour –C–R, A et B pouvant etre identiques au différents

Y est mis pour 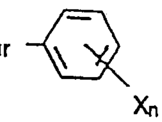

ou pour un radical benzothiazole ou benzoxazole éventuellement substitué par un atome de chlore, de brome, par un groupe méthoxy, éthoxy, nitro et/au amino,

R est mis pour un radical alkyle en $C_1$ à $C_{17}$ éventuellement substitué par un atome de chlore ou de brome, pour un radical phényle éventuellement substitué par un atome de chlore, de brome, par un groupe alkyle en $C_1$ a $C_4$, méthoxy, éthoxy, phénoxy ou nitro, pour un radical alcoxy en $C_1$ a $C_{10}$, pour un radical phénoxy, pour un radical phenoxy-$C_1$- à $C_3$-alkyle, le radical phénoxy étant éventuellement substitué par 1, 2 ou 3 atomes de chlore, de brome ou groupes méthyle ou éthyle et, dans le cas de 2 ou 3 substituants, ceux-ci pouvant être identiques ou différents, pour un radical alcoxyalcoxy à 3-11 atomes de carbone au total, pour un radical phénalkyle en $C_7$ à $C_{10}$ ou pour un radical $C_1$- à -$C_4$ alcoxycarbonyl-$C_2$- à $C_4$-alkyle, X est mis pour un atome de chlore, de brome, pour un radical alkyle en $C_1$ à $C_8$, cyclohexyle, alcoxy en $C_1$ à $C_4$, benzyle, benzyloxy, triflourométhyle, $C_1$- à $C_6$-alcoxycarbonyle, alcoxyalcoxycarbonyle à 3-8 atomes de C dans le groupement alcoxyalcoxy, pour un radical phényle au phénoxy éventuellement substitué par un groupe alkyle en $C_1$ à $C_4$ ou par un atome de chlore ou de brome, pour un radical N-$C_1$- à -$C_{13}$-alkylcarbamoyle, pour un radical N,N-di-$C_1$- à -$C_{13}$-alkylcarbamoyle, et n est mis pour 0, 1, 2, 3, 4 ou 5, les substituants pouvant étre identiques ou différents lorsque n >1.

2. Colorants selon la revendication 1, caractérisés en ce que A et B sont mis pour

O
||
–C–$R^1$ et

Y est mis pour 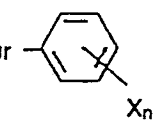

$R^1$ représentant un radical alcoxy en $C_1$ à $C_4$ ou alkyle en $C_2$ à $C_{15}$,
X représente un atome de chlore ou un radical méthyle et
n est mis pour 0, 1, 2, 3 ou 4, les substituants pouvant être identiques ou différents lorsque n >1.

3. Colorants selon la revendication 2, caractérisés en ce que $R^1$ est mis pour un radical méthoxy, éthoxy, n-butoxy, éthyle, n-propyle ou pour n-$C_{15}H_{31}$ et n pour 0, 1, 2 ou 3.

4. Utilisation des colorants selan la revendication 1 pour la teinture et l'impression de cellulose ou de matières fibreuses contenant de la cellulose, gonflées par des agents gonflants miscibles à l'eau.